# EUROPEAN PATENT SPECIFICATION

(11) **EP 1 932 655 B1**
(45) Date of publication and mention of the grant of the patent: **05.05.2010**
(21) Application number: 07123095.7
(22) Date of filing: 13.12.2007
(51) Int. Cl.: B29C 73/22, B60C 19/12

(54) **Method for building a puncture sealant tire and tire obtained thereby**
Verfahren zur Herstellung eines pannensicheren Reifens und damit hergestellter Reifen
Procédé pour la fabrication d'un pneu avec produit d'obturation anti-crevaison et pneu ainsi obtenu

(30) Priority: 15.12.2006 US 639721
(43) Date of publication of application: 18.06.2008
(73) Proprietor: The Goodyear Tire & Rubber Company, Akron, OH 44316-0001 (US)
(72) Inventor: Marks, Patrick David, Uniontown, OH 44685 (US); Fuhrig, Thomas Roy, North Canton, OH 44720 (US); Incavo, Joseph Alan, Hudson, OH 44236 (US); Koerner, James Earl, Uniontown, OH 44685 (US); Parsons, Terrence Lee, North Canton, OH 44720 (US); Schmalix, Charles Kenneth, Canal Fulton, OH 44614 (US); Blackiston, Paul Keyser, Massillon, OH 44646 (US); Busch, Warren James, North Canton, OH 44720 (US); Lovell, Timothy Patrick, Uniontown, OH 44685 (US)
(74) Representative: Kutsch, Bernd

(56) References cited:
- EP-A- 0 189 303
- EP-A- 0 264 506
- EP-A- 1 065 042
- EP-A- 1 426 201
- EP-A- 1 533 108
- EP-A- 1 688 239
- US-A- 4 286 643

## Description

### Technical Field

This invention relates to a method for making a tire which includes applying a puncture sealant to tire components mounted upon a tire building drum. The invention also relates to a tire with a built in sealant.

### Background of the invention

It is known in the prior art to apply puncture sealants made of puncture sealing rubber or plastic material on the crown portion of the tire so that when a sharp object such as a nail pierces the tire, the tire sealant forms a seal around the puncture. Tire sealants of this nature tend to flow or be soft resulting in a tendency to migrate towards the center portion of the tire due to centrifugal force as the tire is rotated at high speeds. Thus the outer portions of the crown have reduced sealant volume due to migration of the sealant towards the center. It is known in the prior art to compartmentalize a sealant into multiple cells such as shown in US-B- 2,877,819 or US-B- 4,388,261. One disadvantage to compartmentalizing the sealant into multiple cells is that the manufacturing process is costly. Further, having too many compartments may impede the effective flow of the sealant needed to seal a puncture. Further, using an extruder to manufacture the sealant into compartments is costly and requires additional manufacturing steps. Thus it is desired to provide a tire and a low cost manufacturing method for providing puncture sealant in a tire which does not migrate during use.

US-A- 4,286,643 describes a tire according to the preamble of claim 8.

### Definitions

"Aspect Ratio" means the ratio of a tire's section height to its section width.

"Axial" and "axially" mean the lines or directions that are parallel to the axis of rotation of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Cord" means one of the reinforcement strands, including fibers, which are used to reinforce the plies.

"Inner Liner" means the layer or layers of elastomer or other material that form the inside surface of a tubeless tire and that contain the inflating fluid within the tire.

"Ply" means a cord-reinforced layer of elastomer-coated, radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which the ply cords which extend from bead to bead are laid at cord angles between 65° and 90° with respect to the equatorial plane of the tire.

"Sidewall" means a portion of a tire between the tread and the bead.

"Skive" or "skive angle" refers to the cutting angle of a knife with respect to the material being cut; the skive angle is measured with respect to the plane of the flat material being cut.

"Laminate structure" means an unvulcanized structure made of one or more layers of tire or elastomer components such as the innerliner, sidewalls, and optional ply layer.

### Summary of the Invention

The invention relates to a method according to claim 1 and a tire according to claim 8.

Dependent claims refer to preferred embodiments of the invention.

### Brief Description of the Drawings

The structure, operation, and advantage of the invention will become further apparent upon consideration of the following description taken in conjunction with the accompanying drawings wherein:
Figure 1 is a schematic view of a cross section of tire with sealant;
Figure 2 is a schematic view of a cross section of the sealant, barrier and innerliner layers shown on the tire building drum;
Figure 3 is a schematic view of an alternate embodiment of the cross section of the sealant, barrier and innerliner layers shown on the tire building drum.

### Detailed Description of the Invention

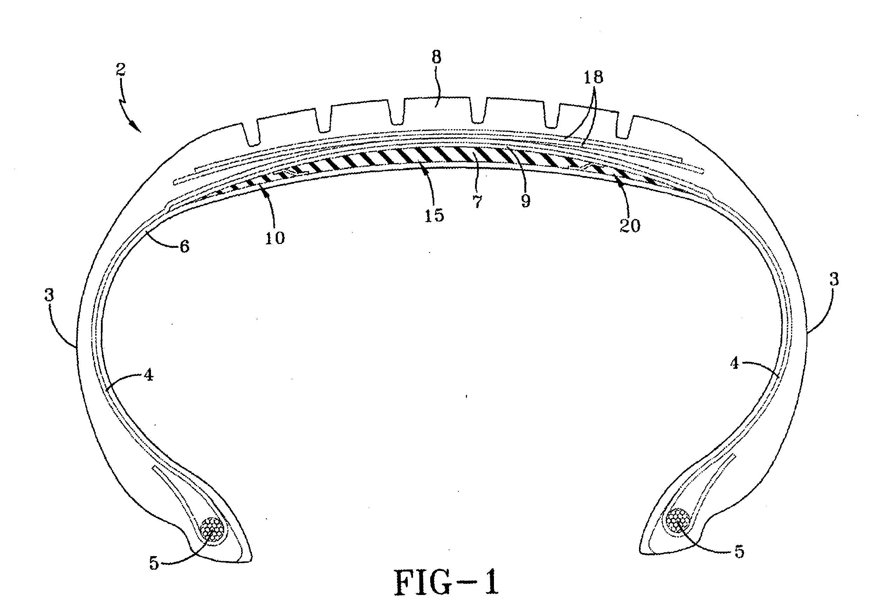

Referring now to Figure 1, there is illustrated a cross-sectional view of a self-sealing pneumatic tire constructed in accordance with the invention. The tire may be any type of tire. For example, a truck tire, a light truck tire or a passenger tire. The tire 2 includes sidewalls 3, a supporting tire carcass 4, a pair of beads 5, an inner liner 6, a layer of sealant 7, a cover layer 9 and an outer circumferential tread 8. The sidewalls 3 extend radially inward from the axial outer edges of the tread portion 8 to join the respective beads. The carcass 4 acts as a support structure for the tread and sidewalls, and comprises one or more layers of ply. Sealant layer 7 is shown disposed between the inner liner 6 and an elastomer cover layer 9 such as for example, a rubber layer, a ply layer or an optional barrier layer. The cover layer 9 may have a width sized to cover the sealant layer such as from shoulder to shoulder, or may further extend down into the bead area between the ply and innerliner. The sealant layer 7 may also be disposed at different locations as described in more detail below. The tread region 8 forms a crown region of the carcass. In the interior region of the tread, there is generally found one or more belts 18. The surface region of the tread forms a tread pattern.

### Sealant Composition

The sealant 7 may comprise any suitable sealant composition known to those skilled in the art, such as rubber or elastomer compositions and plastic compositions. One suitable polymer composition suitable for use is described in US-B- 4,895,610, the entirety of which is incorporated by reference. The polymer compositions described therein include the following composition by weight: 100 parts of a butyl rubber copolymer, 10 to 40 parts of carbon black, 5 to 35 parts of an oil extender, and from 1 to 8 parts of a peroxide vulcanizing agent. A second polymer composition includes the following composition by weight: 100 parts of a butyl rubber copolymer, 20 to 30 parts of carbon black, 8 to 12 parts of an oil extender, and from 2 to 4 parts of a peroxide vulcanizing agent.

The sealant 7 may also comprise a colored polymer composition as described in US-B- 7,073,550, the entirety of which is incorporated herein by reference. The colored polymer composition comprises, based upon parts by weight per 100 parts by weight of partially depolymerized butyl rubber exclusive of carbon black:
(A) a partially organoperoxide-depolymerized butyl rubber as a copolymer of isobutylene and isoprene, wherein said butyl rubber, prior to such depolymerization, comprises 0.5 to 5, preferably within a range of from 0.5 to 1, percent units derived from isoprene, and correspondingly from 95 to 99.5, preferably within a range of from 99 to 99.5, weight percent units derived from isobutylene;
(B) particulate reinforcing filler comprising:
   (1) 20 to 50 phr of synthetic amorphous silica, preferably precipitated silica, or
   (2) 15 to 30 phr synthetic amorphous silica, preferably precipitated silica, and 5 to 20 phr of clay, preferably kaolin clay, or
   (3) 15 to 30 phr synthetic amorphous silica, preferably precipitated silica, and 5 to 20 phr of calcium carbonate,
   (4) 15 to 30 phr synthetic amorphous silica, preferably precipitated silica, 5 to 15 phr of clay, preferably kaolin clay, and 5 to 15 phr of calcium carbonate;
(C) from 0 to 6, alternately 0.5 to 5, phr of short organic fibers
(D) a colorant of other than a black color wherein said colorant is selected from at least one of organic pigments, inorganic pigments and dyes, preferably from organic pigments and inorganic pigments;
(E) from 0 to 20, alternately 2 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent.

Another sealant polymer composition which may be utilized by the invention is described in US-B- 6,837,287, the entirety of which is hereby incorporated by reference.

Further, any sealant polymer composition may also be used with the invention that has a polymer composition of butyl rubber and an organoperoxide vulcanizing agent which becomes activated at high temperatures above 100° C.

### Tire Configuration with Sealant

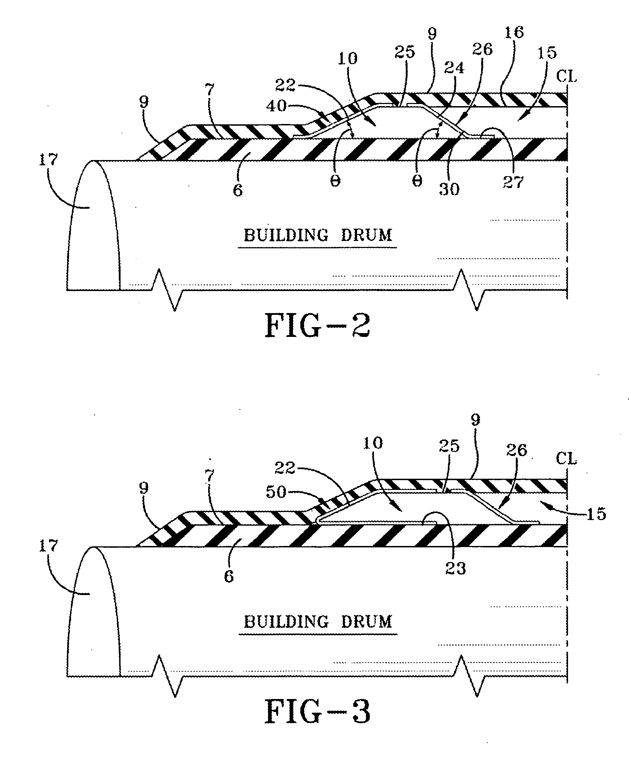

Figure 1 illustrates one example of a sealant configuration for a tire. The sealant comprises two or more zones, preferably two or more axially outer zones 10, 20 located between the shoulder portion and the center portion of the tire and one or more axially inner zones 15 located in the center portion of the tire. As shown in Figure 2, the sealant in the axially outer zones 10, 20 is first applied to the tire building drum 17 directly over the tire inner liner 6 and then spliced together. The sealant in each of the axially outer zone preferably has an axially outer end 22 and an axially inner end 24. The outer and inner ends 22, 24 may be angled at an angle θ in the range of 10 degrees to 90 degrees, more preferably in the range of 30 to 60 degrees. Thus the sealant in the axially outer zones may have a trapezoidal cross-section or any desired cross-sectional shape. The sealant width may be in the range of 2.54 cm to 15.24 cm, preferably 7.62 cm to 15.24 cm.

The sealant 7 may be applied directly to a tire component mounted on the tire building drum using a gear pump extruder. The gear pump extruder may have a shaping die to extrude the sealant in a continuous strip onto the rotating tire drum. The strip is spirally wound onto the tire building drum wherein the edge of each strip abuts with an adjacent strip. The sealant may also be extruded to a desired shape and then applied to the tire building drum using a machine applier or by hand.

Next, a strip of elastomer, gum strip of rubber, fabric, dipped fabric, or any other suitable material known to those skilled in the art (hereinafter, "divider strip") is applied over the axially inner end 24. The divider strip 26 has a sufficient width to extend from the top surface 25 of the sealant outer zone 10, along the entire angled end 24 and then directly onto a portion of the tire liner 27. The width of the divider strip may range from 1.27 cm to 7.62 cm, depending upon the thickness of the sealant. The thickness of the strip may be, for example, 0.127 cm to 0.254 cm. The divider strip is applied circumferentially around the entire axially inner end 24 and then spliced together, in order to form a barrier between the axially outer zones and the axially inner zone(s). The divider strip 26 may be applied manually or by machine, such as by a gear pump extruder.

Next one or more axially inner zones 15 of the sealant are applied to the tire building drum. The axially inner zone(s) 15 has a first and second surface 30 for mating with the respective divider strip 26. The first and second surfaces 30 are preferably shaped at the same angular inclination as the abutting surfaces 24. The axially outer zones 10, 20 and the one or more inner zones 15 and the two or more divider strips 26 are closely spaced in an abutting relationship.

A cover layer 9 is applied directly over the liner, the sealant axially outer angled end 22 and the upper surface 25 of the axially outer zones 10, 20 and over the upper surface 16 of the sealant in the one or more axially inner zones 15. In particular, the liner, divider strip 26 and the barrier layer 9 upon vulcanization, form a dam or barrier to prevent the built in sealant from migrating towards the centerline during tire operation.

An optional shoulder divider strip 40 may also be applied to the axially outer surface 22 of the axially outer zones 10, 20. The divider strip together with the liner 6 and barrier 40 prevent migration of the sealant into the shoulder area of the tire.

Alternatively, as shown in Figure 3, a square woven mesh fabric 50 may be applied along a portion of the top surface 25, outer end surface 22 and optionally wrap around a portion of bottom surface 23 of the axially outer zone 10, 20. The woven mesh fabric 50 is designed to hold the sealant in the shoulder area and prevention migration to the centerline of the tire.

The thickness of the sealant in each of the zones 10, 15, 20 can vary greatly in an unvulcanized puncture sealant-containing tire. Generally, the thickness of the sealant composition layer may range from about 0.13 cm to about 1.9 cm. In passenger and truck tires it is normally desired for the sealant composition layer to have a thickness of about 0.32 cm or in a range from 0.2 cm to 0.4 cm.

After the unvulcanized pneumatic rubber tires of this invention are assembled they are vulcanized using a normal tire cure cycle. The tires of this invention can be cured over a wide temperature range depending somewhat upon the size of the tire and the degree of desired depolymerization of the butyl rubber as well as the thickness of the sealant layer itself) and sufficient to at least partially depolymerize said sealant precursor layer to the aforesaid storage modulus (G') physical property.

## Claims

1. A method of making a tire with a built in sealant (7), the method comprising the steps of:
mounting an inner liner (6) onto a tire building drum (17);
placing two axially outer sealant zones (10, 20) onto the inner liner (6), each axially outer sealant zone (10, 20) having an axially outer surface (22), an upper surface (25) and an axially inner surface (24);
subsequently laying a circumferential divider strip (26) along a portion of the respective upper surface (25) and along the respective axially inner surface (24) of each of the axially outer sealant zones (10, 20), said divider strips (26) further extending onto the inner liner (6);
placing one or more axially inner sealant zones (15) between the two axially outer sealant zones (10, 20) and into abutment with the divider strips (26); and
applying a barrier layer (9) having a suitable width to extend from tire shoulder to tire shoulder, wherein the divider strips (26) form a barrier with the barrier layer (9) and the inner liner (6) upon vulcanization of the tire (2).

2. The method of claim 1 wherein only one axially inner sealant zone (15) is placed between the two axially outer zones (10, 20) and into abutment with the divider strips (26).

3. The method of claim 1 or 2 wherein the axially outer sealant zones (10, 20) have angled outer walls and angled inner walls, wherein the axially inner sealant zone (15) has mating outer walls for adjoining to the angled inner walls of said axially outer sealant zones (10, 20).

4. The method of one of the previous claims wherein the sealant (7) has a width in the range of 15.24 cm to 25.4 cm.

5. The method of at least one of the previous claims wherein the sealant comprises, based upon parts by weight per 100 parts by weight of said partially depolymerized butyl rubber exclusive of carbon black:
(A) a partially organoperoxide-depolymerized butyl rubber as a copolymer of isobutylene and isoprene, wherein said butyl rubber, prior to such depolymerization, comprises 0.5 to 5 percent units derived from isoprene, and correspondingly from 95 to 99.5 weight percent units derived from isobutylene;
(B) particulate reinforcing filler comprising:
(1) 20 to 50 phr of synthetic amorphous silica, or
(2) 15 to 30 phr synthetic amorphous silica, preferably precipitated silica, and 5 to 20 phr of clay, or
(3) 15 to 30 phr synthetic amorphous silica and 5 to 20 phr of calcium carbonate, or
(4) 15 to 30 phr synthetic amorphous silica, 5 to 15 phr of clay and 5 to 15 phr of calcium carbonate;
(C) optionally from 0 to 6 phr of short organic fibers;
(D) a colorant of other than a black color wherein said colorant is selected from at least one of organic pigments, inorganic pigments and dyes; and,
optionally, from 0 to 20 phr of rubber processing oil.

6. The method of claim 1 wherein the divider strips (26) are applied by a gear pump extruder.

7. The method of claim 1 wherein the sealant (7) is applied directly onto the inner liner (6) using a gear pump extruder.

8. A tire with a built in sealant, the tire (2) comprising sidewalls(3), a tire carcass (4) comprising one or more layers of ply, a pair of beads (5), an inner liner (6), a layer of sealant (7) and an outer circumferential tread (8), wherein the sidewalls (3) extend radially inward from the axial outer edges of the tread portion to join the respective beads, wherein the layer of sealant (7) includes two axially outer sealant zones (10, 20) located onto the inner liner (6), each axially outer sealant zone (10, 20) having an axially outer surface (22), an upper surface (25) and an axially inner surface (24), and one or more axially inner sealant zones (15) between the two axially outer sealant zones (10, 20), wherein a circumferential divider strip (26) is located along a portion of the respective upper surface (25) and along the respective axially inner surface (24) of each of the axially outer sealant zones (10, 20), said divider strips (26) extending onto the inner liner (6), and wherein the one or more axially inner sealant zones (15) are into abutment with the divider strips (26), **characterized in that** the layer of sealant (7) is disposed between the inner liner (6) and a barrier layer (9) which has a width to extend from tire shoulder to tire shoulder, and **in that** the divider strips (26) form a barrier with said barrier layer (9) and the inner liner (6) upon vulcanization of the tire (2).

9. The tire of claim 8 wherein the axially inner surface of an axially inner sealant zone (15) is angled in the range of 20 to 70 degrees.

10. The tire of claim 8 or 9 wherein the circumferential divider strip (26) is positioned in the range of 2.54 cm to 15.24 cm from the centerline.

11. The tire of at least one of the previous claims 8 to 10 wherein a circumferential divider (40) is positioned adjacent to the axially outer surface (22) of the axially outer sealant zone (10).

12. The tire of claim 8 wherein the barrier layer (9) extends from bead to bead (5).

13. The tire of at least one of the claims 8 to 12 wherein the divider strips (26) have a first end joined to the barrier layer (9) and a second end joined with the inner layer (6).

14. The tire of claim 8 having only one axially inner sealant zone (15).

15. The tire of claim 8 wherein the sealant comprises, based upon parts by weight per 100 parts by weight of said partially depolymerized butyl rubber exclusive of carbon black:
(A) a partially organoperoxide-depolymerized butyl rubber as a copolymer of isobutylene and isoprene, wherein said butyl rubber, prior to such depolymerization, comprises 0.5 to 5 percent units derived from isoprene, and correspondingly from 95 to 99.5 weight percent units derived from isobutylene;
(B) particulate reinforcing filler comprising:
(1) 20 to 50 phr of synthetic amorphous silica, or
(2) 15 to 30 phr synthetic amorphous silica, preferably precipitated silica, and 5 to 20 phr of clay, or
(3) 15 to 30 phr synthetic amorphous silica and 5 to 20 phr of calcium carbonate, or
(4) 15 to 30 phr synthetic amorphous silica, 5 to 15 phr of clay and 5 to 15 phr of calcium carbonate;
(C) optionally from 0 to 6 phr of short organic fibers;
(D) a colorant of other than a black color wherein said colorant is selected from at least one of organic pigments, inorganic pigments and dyes; and,
optionally, from 0 to 20 phr of rubber processing oil.

## Patentansprüche

1. Verfahren zur Herstellung eines Reifens mit eingebautem Dichtmaterial (7), wobei das Verfahren folgende Schritte umfasst:
Montieren eines Innerliners (6) auf eine Reifenbautrommel (17);
Platzieren von zwei axial äußeren Zonen des Dichtmaterials (10, 20) auf dem Innerliner (6), wobei jede axial äußere Zone des Dichtmaterials (10, 20) eine axial äußere Fläche (22), eine obere Fläche (25) und eine axial innere Fläche (24) aufweist;
anschließend Legen eines umfänglichen Trennstreifens (26) entlang eines Teils der betreffenden oberen Fläche (25) und entlang der betreffenden axial inneren Fläche (24) von jeder der axial äußeren Zonen des Dichtmaterials (10, 20), wobei sich die Trennstreifen (26) weiter auf den Innerliner (6) erstrecken;
Platzieren von einer oder mehreren axial inneren Zonen des Dichtmaterials (15) zwischen den zwei axial äußeren Zonen des Dichtmaterials (10, 20) und angrenzend an die Trennstreifen (26); und
Aufbringen einer Sperrschicht (9) mit einer geeigneten Breite, um sich von Reifenschulter zu Reifenschulter zu erstrecken, wobei die Trennstreifen (26) mit der Sperrschicht (9) und dem Innerliner (6) nach Vulkanisation des Reifens (2) eine Barriere bilden.

2. Verfahren nach Anspruch 1, wobei nur eine axial innere Zone des Dichtmaterials (15) zwischen den zwei axial äußeren Zonen (10, 20) und angrenzend an die Trennstreifen (26) platziert wird.

3. Verfahren nach Anspruch 1 oder 2, wobei die axial äußeren Zonen des Dichtmaterials (10, 20) abgewinkelte äußere Wände und abgewinkelte innere Wände aufweisen, wobei die axial innere Zone des Dichtmaterials (15) passende äußere Wände aufweist, um an die abgewinkelten inneren Wände der axial äußeren Zonen des Dichtmaterials (10, 20) anzugrenzen.

4. Verfahren nach einem der vorhergehenden Ansprüche, wobei das Dichtmaterial (7) eine Breite im Bereich von 15,24 cm bis 25,4 cm aufweist.

5. Verfahren nach mindestens einem der vorhergehenden Ansprüche, wobei das Dichtmaterial, bezogen auf Gewichtsteile pro 100 Gewichtsteilen des teilweise depolymerisierten Butylkautschuks, abgesehen von Ruß, umfasst:
(A) einen teilweise Organoperoxid-depolymerisierten Butylkautschuk als Copolymer von Isobutylen und Isopren, wobei der Butylkautschuk vor der Depolymerisation 0,5 bis 5 Prozent-Einheiten, die von Isopren abgeleitet sind, und entsprechend 95 bis 99,5 Gewichtsprozent-Einheiten, die von Isobutylen abgeleitet sind, umfasst;
(B) teilchenförmigen verstärkenden Füllstoff umfassend:
(1) 20 bis 50 phr synthetische amorphe Kieselsäure oder
(2) 15 bis 30 phr synthetische amorphe Kieselsäure, bevorzugt Fällungskieselsäure, und 5 bis 20 phr Ton oder
(3) 15 bis 30 phr synthetische amorphe Kieselsäure und 5 bis 20 phr Calciumcarbonat oder
(4) 15 bis 30 phr synthetische amorphe Kieselsäure, 5 bis 15 phr Ton und 5 bis 15 phr Calciumcarbonat;
(C) gegebenenfalls 0 bis 6 phr kurze organische Fasern;
(D) ein farbgebendes Mittel, das von einer schwarzen Farbe verschieden ist, wobei das farbgebende Mittel ausgewählt ist aus mindestens einem aus organischen Pigmenten, anorganischen Pigmenten und Farbstoffen; und
gegebenenfalls 0 bis 20 phr Kautschuk-Verarbeitungsöl.

6. Verfahren nach Anspruch 1, wobei die Trennstreifen (26) mit einem Zahnradpumpenextruder aufgebracht werden.

7. Verfahren nach Anspruch 1, wobei das Dichtmaterial (7) direkt auf den Innerliner (6) unter Verwendung eines Zahnradpumpenextruders aufgebracht wird.

8. Reifen mit eingebautem Dichtmaterial, wobei der Reifen (2) Seitenwände (3), eine Reifenkarkasse (4) umfassend eine oder mehrere Schichten oder Lagen, ein Paar von Wülsten (5), einen Innerliner (6), eine Schicht von Dichtmaterial (7) und eine äußere Umfangslauffläche (8) umfasst, wobei die Seitenwände (3) sich radial einwärts von den axial äußeren Rändern des Laufflächenteils erstrecken, um die jeweiligen Wülste zu verbinden, wobei die Schicht des Dichtmaterials (7) zwei axial äußere Zonen des Dichtmaterials (10, 20), die sich auf dem Innerliner (6) befinden, wobei jede axial äußere Zone des Dichtmaterials (10, 20) eine axial äußere Fläche (22), eine obere Fläche (25) und eine axial innere Fläche (24) aufweist, und eine oder mehrere axial innere Zonen des Dichtmaterials (15) zwischen den zwei axial äußeren Zonen des Dichtmaterials (10, 20) beinhaltet, wobei ein umfänglicher Trennstreifen (26) entlang eines Teils der betreffenden oberen Fläche (25) und entlang der betreffenden axial inneren Fläche (24) von jeder der axial äußeren Zonen des Dichtmaterials (10, 20) angeordnet ist, wobei sich die Trennstreifen (26) auf den Innerliner (6) erstrecken und wobei die eine oder die mehreren axial inneren Zonen des Dichtmaterials (15) an die Trennstreifen (26) angrenzen, **dadurch gekennzeichnet, dass** die Schicht des Dichtmaterials (7) zwischen dem Innerliner (6) und einer Sperrschicht (9) mit einer Breite, um sich von Reifenschulter zu Reifenschulter zu erstrecken, angeordnet ist und dass die Trennstreifen (26) mit der Sperrschicht (9) und dem Innerliner (6) nach Vulkanisation des Reifens (2) eine Barriere bilden.

9. Reifen nach Anspruch 8, worin die axial innere Fläche einer axial inneren Zone des Dichtmaterials (15) in einem Bereich von 20 bis 70° abgewinkelt ist.

10. Reifen nach Anspruch 8 oder 9, worin der umfängliche Trennstreifen (26) in einem Bereich von 2,54 cm bis 15,24 cm von der Mittellinie positioniert ist.

11. Reifen nach mindestens einem der vorhergehenden Ansprüche 8 bis 10, wobei ein umfängliches Trennelement (40) benachbart zur axial äußeren Fläche (22) der axial äußeren Zone des Dichtmaterials (10) positioniert ist.

12. Reifen nach Anspruch 8, wobei die Sperrschicht (9) sich von Wulst zu Wulst (5) erstreckt.

13. Reifen nach mindestens einem der Ansprüche 8 bis 12, wobei die Trennstreifen (26) ein erstes Ende, das mit der Sperrschicht (9) verbunden ist, und ein zweites Ende, das mit dem Innerliner (6) verbunden ist, aufweisen.

14. Reifen nach Anspruch 8 mit nur einen axial inneren Zone des Dichtmaterials (15).

15. Reifen nach Anspruch 8, wobei das Dichtmaterial, bezogen auf Gewichtsteile pro 100 Gewichtsteilen des teilweise depolymerisierten Butylkautschuks, abgesehen von Ruß, umfasst:
(A) einen teilweise Organoperoxid-depolymerisierten Butylkautschuk als Copolymer von Isobutylen und Isopren, wobei der Butylkautschuk vor der Depolymerisation 0,5 bis 5 Prozent-Einheiten, die von Isopren abgeleitet sind, und entsprechend 95 bis 99,5 Gewichtsprozent-Einheiten, die von Isobutylen abgeleitet sind, umfasst;
(B) teilchenförmigen verstärkenden Füllstoff umfassend:
(1) 20 bis 50 phr synthetische amorphe Kieselsäure oder
(2) 15 bis 30 phr synthetische amorphe Kieselsäure, bevorzugt Fällungskieselsäure, und 5 bis 20 phr Ton oder
(3) 15 bis 30 phr synthetische amorphe Kieselsäure und 5 bis 20 phr Calciumcarbonat oder
(4) 15 bis 30 phr synthetische amorphe Kieselsäure, 5 bis 15 phr Ton und 5 bis 15 phr Calciumcarbonat;
(C) gegebenenfalls 0 bis 6 phr kurze organische Fasern;
(D) ein farbgebendes Mittel, das von einer schwarzen Farbe verschieden ist, wobei das farbgebende Mittel ausgewählt ist aus mindestens einem aus organischen Pigmenten, anorganischen Pigmenten und Farbstoffen; und
gegebenenfalls 0 bis 20 phr Kautschuk-Verarbeitungsöl.

## Revendications

1. Procédé de confection d'un bandage pneumatique dans lequel est incorporé un agent d'étanchéité (7), le procédé comprenant les étapes consistant à :
monter un calandrage intérieur (6) sur un tambour de confection de bandage pneumatique (17) ;
placer deux zones d'étanchéité externes en direction axiale (10, 20) sur le calandrage intérieur (6), chaque zone d'étanchéité externe en direction axiale (10, 20) possédant une surface externe en direction axiale (22), une surface supérieure (25) et une surface interne en direction axiale (24) ;
poser ensuite une bande intercalaire circonférentielle (26) le long d'une portion de la surface supérieure respective (25) et le long de la surface interne respective en direction axiale (24) de chacune des zones d'étanchéité externes en direction axiale (10, 20), lesdites bandes intercalaires (26) s'étendant en outre sur le calandrage intérieur (6) ;
placer une ou plusieurs zones d'étanchéité internes en direction axiale (15) entre les deux zones d'étanchéité externes en direction axiale (10, 20) et en contact bout-à-bout avec les bandes intercalaires (26) ; et
appliquer une couche d'arrêt (9) possédant une largeur appropriée pour s'étendre d'un épaulement du bandage pneumatique à l'autre, les bandes intercalaires (26) formant une barrière avec la couche d'arrêt (9) et avec le calandrage intérieur (6) lors de la vulcanisation du bandage pneumatique (2).

2. Procédé selon la revendication 1, dans lequel une zone d'étanchéité interne en direction axiale (15) vient se placer entre les deux zones externes en direction axiale (10, 20) et en contact des bout-à-bout avec les bandes intercalaires (26).

3. Procédé selon la revendication 1 ou 2, dans lequel les zones d'étanchéité externes en direction axiale (10, 20) possèdent des parois externes angulaires et des parois internes angulaires, la zone d'étanchéité interne en direction axiale (15) possédant des parois externes correspondantes pour la jonction aux parois internes angulaires desdites zones d'étanchéité externe en direction axiale (10, 20).

4. Procédé selon au moins une des revendications précédentes, dans lequel l'agent d'étanchéité (7) possède une largeur de la plage de 15,24 cm à 25,4 cm.

5. Procédé selon au moins une des revendications précédentes, dans lequel l'agent d'étanchéité comprend, basés sur des parties en poids par 100 parties en poids dudit caoutchouc butyle partiellement dépolymérisé, sans compter le noir de carboné :
(A) un caoutchouc butyle partiellement dépolymérisé à l'aide d'un organoperoxyde sous la forme d'un copolymère d'isobutylène et d'isoprène, ledit caoutchouc butyle, avant ladite dépolymérisation, comprenant, entre 0,5 et 5 % en poids, des unités qui dérivent de l'isoprène et de manière correspondante entre 95 et 99,5 % en poids, des unités qui dérivent de l'isobutylène ;
(B) une matière de charge particulaire pour le renforcement, comprenant :
(1) à concurrence de 20 à 50 phr, de la silice amorphe synthétique ;
(2) à concurrence de 15 à 30 phr, de la silice amorphe synthétique, de préférence de la silice précipitée, et à concurrence de 5 à 20 phr, de l'argile, ou bien
(3) à concurrence de 15 à 30 phr, de la silice amorphe synthétique et à concurrence de 5 à 20 phr du carbonate de calcium, ou bien
(4) à concurrence de 15 à 30 phr, de la silice amorphe synthétique, à concurrence de 5 à 15 phr de l'argile et à concurrence de 5 à 15 phr du carbonate de calcium ;
(C) le cas échéant, à concurrence de 0 à 6 phr, de courtes fibres organiques ;
(D) une matière colorante d'une couleur différente du noir, ladite matière colorante représentant au moins un membre choisi parmi le groupe comprenant des pigments organiques, des pigments inorganiques et des colorants ; et
le cas échéant, à concurrence de 0 de 20 phr, une huile plastifiante pour le caoutchouc.

6. Procédé selon la revendication 1, dans lequel les bandes intercalaires (26) sont appliquées par une extrudeuse comprenant une pompe à engrenages.

7. Procédé selon la revendication 1, dans lequel l'agent d'étanchéité (7) est appliqué directement sur le calandrage intérieur (6) en utilisant une extrudeuse comprenant une pompe à engrenages.

8. Bandage pneumatique dans lequel est incorporé un agent d'étanchéité, le bandage pneumatique (2) comprenant des flancs (3), une carcasse de bandage pneumatique (4) comprenant une ou plusieurs couches formant des plis, une paire de talons (5), un calandrage intérieur (6), une couche faisant office d'agent d'étanchéité (7) et une bande de roulement circonférentielle externe (8), les flancs (3) s'étendant vers l'intérieur en direction radiale à partir des bords axiaux externes de la portion de bande de roulement pour joindre les talons respectifs, la couche faisant office d'agent d'étanchéité (7) englobant deux zones d'étanchéité externes en direction axiale (10, 20) disposées sur le calandrage intérieur (6), chaque zone d'étanchéité externe en direction axiale (10, 20) possédant une surface externe (22) en direction axiale, une surface supérieure (25) et une surface interne (24) en direction axiale, et une ou plusieurs zones d'étanchéité internes en direction axiale (15) entre les deux zones externes en direction axiale (10, 20), dans lequel une bande intercalaire circonférentielle (26) vient se disposer le long d'une portion de la surface supérieure respective (25) et le long de la surface interne respective en direction axiale (24) de chacune des zones d'étanchéité externes en direction axiale (10, 20), lesdites bandes intercalaires (26) s'étendant en outre sur le calandrage intérieur (6), et dans lequel lesdites une ou plusieurs zones d'étanchéité internes en direction axiale (15) viennent se mettre en contact bout-à-bout avec les bandes intercalaires (26),
**caractérisé en ce que** la couche faisant office d'agent d'étanchéité (7) vient se disposer entre le calandrage intérieur (6) et une couche d'arrêt (9) qui possède une largeur appropriée pour s'étendre d'un épaulement du bandage pneumatique à l'autre, et **en ce que** les bandes intercalaires (26) forment une barrière avec ladite couche d'arrêt (9) et avec le calandrage intérieur (6) lors de la vulcanisation du bandage pneumatique (2).

9. Bandage pneumatique selon la revendication 8, dans lequel la surface interne en direction axiale d'une zone d'étanchéité interne en direction axiale (15) forme un angle dans la plage de 20 à 70 degrés.

10. Bandage pneumatique selon la revendication 8 ou 9, dans lequel la bande intercalaire circonférentielle (26) vient se disposer à une distance dans la plage de 2,54 cm à 15,24 cm par rapport à la ligne médiane.

11. Bandage pneumatique selon au moins des revendications précédentes 8 à 10, dans lequel un intercalaire circonférentiel (40) est disposé en position adjacente à la surface externe en direction axiale (22) de la zone d'étanchéité externe en direction axiale (10).

12. Bandage pneumatique selon la revendication 8, dans lequel la couche d'arrêt 9 étant d'un talon (5) à l'autre.

13. Bandage pneumatique selon au moins des revendications précédentes 8 à 12, dans lequel les bandes intercalaires (26) possèdent une première extrémité jointe à la couche d'arrêt (9) et une deuxième extrémité est jointe à la couche interne (6).

14. Bandage pneumatique selon la revendication 8, possédant une seule zone d'étanchéité interne en direction axiale (15).

15. Bandage pneumatique selon la revendication 8, dans lequel l'agent d'étanchéité, comprend, basés sur des parties en poids par 100 parties en poids dudit caoutchouc butyle partiellement dépolymérisé, sans compter le noir de carbone :
(A) un caoutchouc butyle partiellement dépolymérisé à l'aide d'un organoperoxyde sous la forme d'un copolymère d'isobutylène et d'isoprène, ledit caoutchouc butyle, avant ladite dépolymérisation, comprenant, entre 0,5 et 5 % en poids, des unités qui dérivent de l'isoprène et de manière correspondante entre 95 et 99,5 % en poids, des unités qui dérivent de l'isobutylène ;
(B) une matière de charge particulaire pour le renforcement, comprenant :
(1) à concurrence de 20 à 50 phr, de la silice amorphe synthétique ;
(2) à concurrence de 15 à 30 phr, de la silice amorphe synthétique, de préférence de la silice précipitée, et à concurrence de 5 à 20 phr, de l'argile, ou bien
(3) à concurrence de 15 à 30 phr, de la silice amorphe synthétique et à concurrence de 5 à 20 phr du carbonate de calcium, ou bien
(4) à concurrence de 15 à 30 phr, de la silice amorphe synthétique, à concurrence de 5 à 15 phr de l'argile et à concurrence de 5 à 15 phr du carbonate de calcium ;
(C) le cas échéant, à concurrence de 0 à 6 phr, de courtes fibres organiques ;
(D) une matière colorante d'une couleur différente du noir, ladite matière colorante représentant au moins un membre choisi parmi le groupe comprenant des pigments organiques, des pigments inorganiques et des colorants ; et
le cas échéant, à concurrence de 0 de 20 phr, une huile plastifiante pour le caoutchouc.
